# EUROPEAN PATENT APPLICATION

(11) **EP 3 498 127 A1**
(43) Date of publication of application: **19.06.2019**
(21) Application number: 18181535.8
(22) Date of filing: 03.07.2018
(51) Int. Cl.: A45F 3/02, A45F 3/04

(54) **MULTIFUNCTION BACKPACK**

(30) Priority: 18.12.2017 CN 201721773289 U
(71) Applicant: Miasole Photovoltaic Technology Co., Ltd., Beijing (CN)
(72) Inventor: YANG, Sheng, Beijing (CN); OU, Haijin, Beijing (CN); WEN, Junrong, Beijing (CN)
(74) Representative: Cabinet Beau de Loménie

(57) **Abstract**

The present disclosure discloses a multifunctional backpack (1) including a backpack main body and a strap. The multifunctional backpack (1) further includes: a controller (10); and a solar panel (20), a cooling unit (30), a heating unit (40) and a power storage module (50), which are electrically connected with the controller (10), respectively. The cooling unit (30), the heating unit (40) and the solar panel (20) are also electrically connected with the power storage module (50), respectively. The solar panel (20) is detachably mounted on a front side of the backpack main body. The power storage module (50) is detachably mounted inside the backpack main body. The cooling unit (30) and the heating unit (40) are respectively mounted on a back side of the backpack main body and/or on the strap. A peripheral interface (60; 70) is also provided on the backpack main body, the peripheral interface is electrically connected with the power storage module (50) and/or the solar panel (20).

## Description

### TECHNICAL FIELD

The present disclosure relates to an application field of solar energy, in particular, to a multifunctional backpack.

### BACKGROUND

As storage containers generally used for storing objects, backpacks are widely used in various applications. With the development of science and technology, the function of backpacks is not only to store objects. For example, some backpacks currently on the market are integrated with a cooling fan for heat dissipation of human body; some backpacks are integrated with a solar cell in order to be used as a mobile power supply; and some backpacks are integrated with a power bank so as to charge external devices.

However, these backpacks mentioned above still need improvements in some aspects such as relatively simple functions or various functions independent from one another. Therefore, the existing backpacks cannot provide richer functionality, more convenient applications and more comprehensive user experiences.

### SUMMARY

An objective of the present disclosure is to provide a multifunctional backpack with richer functionality and more convenient applications, thereby improving user experiences.

The technical solution according to the present disclosure is as follows.

In an aspect, a multifunctional backpack includes a backpack main body and a strap, and the multifunctional backpack further includes: a controller, as well as a solar panel, a cooling unit, a heating unit and a power storage module electrically connected with the controller; the cooling unit, the heating unit and the solar panel are also electrically connected with the power storage module, respectively;
the solar panel is detachably mounted on a front side of the backpack main body;
the power storage module is detachably mounted inside the backpack main body;
the cooling unit and the heating unit are respectively mounted on a back side of the backpack main body and/or the strap;
a peripheral interface is also provided on the backpack main body, and is electrically connected with the power storage module and/or the solar panel;
the controller is configured to controll switches between a cooling mode, a heating mode and a power storage mode.

In an aspect, the controller is also electrically connected with the peripheral interface for controlling an electrical connection with the peripheral interface to be switched on/off.

In an aspect, the controller is used for controlling switches between an electrical connection mode with the peripheral interface, a cooling mode, a heating mode and a power storage mode.

In an aspect, the multifunctional backpack further includes a display screen, the display screen being mounted on the front side of the backpack main body, and being electrically connected with the power storage module and the controller, respectively;
the controller is also configured tocontroll the display screen to be turned on or off.

In an aspect, the multifunctional backpack further includes a warning light, the warning light being mounted on the backpack main body and/or the strap, and being electrically connected with the power storage module and the controller, respectively;
the controller is also configured tocontroll the warning light to be turned on or off.

In an aspect, the multifunctional backpack further includes: a first temperature sensor and a second temperature sensor;
the first temperature sensor and the second temperature sensor are electrically connected with the controller, respectively;
the first temperature sensor is disposed at the cooling unit, the second temperature sensor being disposed at the heating unit.

In an aspect, the display screen is a flexible display screen.

In an aspect, the warning light is a fluorescent lamp.

In an aspect, the cooling unit and the heating unit are detachable, respectively.

In an aspect, the heating unit is made of carbon nanotubes composite material.

In an aspect, the cooling unit uses a semiconductor cooling apparatus.

In an aspect, the cooling unit includes a hollow permeable layer covering the back side of the backpack main body, in which a fluid guide channel and one or more fans are provided.

In an aspect, the solar panel is a solar crystalline silicon cell, or a solar thin film cell.

In an aspect, the power storage module is a rechargeable cell.

The multifunctional backpack provided by the present disclosure is integrated with functions such as cooling, heating, solar collecting and energy storing, and may be switched between various functions in order to satisfy changes in temperature and simultaneously effectively utilize natural resources. Therefore, the present disclosure has at least one of advantages of providing comprehensive functions and environmental protection, applying to all seasons, and providing charge function of an electronic terminal for a user by a peripheral interface. Further, the solar panel and the power storage module that may be independently detached overcome usage limitation of the backpack.

### BRIEF DESCRIPTION OF THE DRAWINGS

To make objectives, solutions and advantages of the present disclosure clearer, the present disclosure will be further described with reference to accompanying drawings in which:
Fig. 1 is a schematic view of electrical connection in an embodiment of the multifunctional backpack according to the present disclosure;
Fig. 2 is a schematic view of electrical connection in another embodiment of the multifunctional backpack according to the present disclosure.

### DETAILED DESCRIPTION

Embodiments of the present disclosure will be described in detail below and examples of these embodiments are shown in the accompanying drawings, wherein same or similar reference numbers denote same or similar elements, or elements having same or similar functions throughout the present disclosure. Embodiments described below with reference to accompanying drawings are exemplary, which are not merely intended to explain the present disclosure and cannot be interpreted as limitation of the present disclosure.

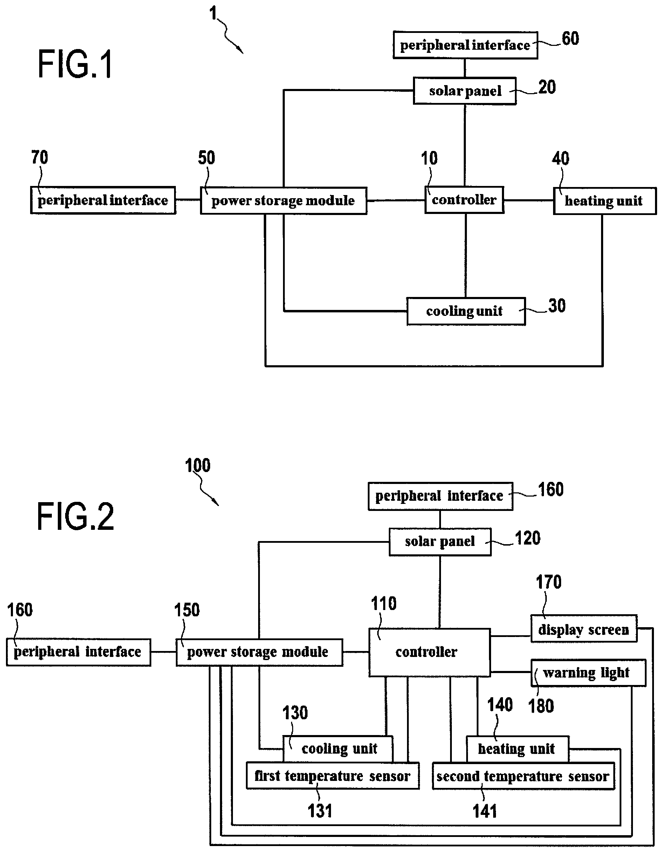

The present disclosure provides an embodiment of the multifunctional backpack. The multifunctional backpack 1 includes a backpack main body and a strap, as shown in Fig. 1, and further includes: a controller 10, as well as a solar panel 20, a cooling unit 30, a heating unit 40 and a power storage module 50 electrically connected with the controller 10, wherein the cooling unit 30, the heating unit 40 and the solar panel 20 are also electrically connected with the power storage module 50, respectively, and a peripheral interface such as various types of USB ports is also provided on the backpack main body. The peripheral interface is electrically connected with the power storage module and/or the solar panel for charging external devices. The number of the peripheral interfaces and the power supply resource are not limited by the present disclosure. For example, one peripheral interface 60 may be charged by the solar panel 20 through a voltage conversion circuit (or directly), while another peripheral interface 70 is charged by the power storage module 50. Also, the solar panel 20 and the power storage module may be combined so as to provide sufficient power supply for one or more peripheral interfaces. It should be noted that the multifunctional backpack may be a daily double-shoulders backpack or a single-shoulder backpack, and may also be a backpack with other carrying forms, without limiting functions and dimensions of the backpack. For example, it may be a schoolbag, a business backpack, a sports backpack, a military backpack or a special operation backpack.

With respect to the solar panel 20, it may be a solar crystalline silicon cell or an amorphous silicon solar cell such as a solar thin film cell, and may be mounted on the front side of the backpack main body which may specifically be mounted on positions convenient for direct sunlight such as the upper portion or top portion of the backpack main body. It should be illustrated that, on the one hand, the front side of the backpack main body refers to a side of the backpack carried by an user away from the human body, i.e. a side facing outside, whereas the back side of the backpack main body refers to a side of the backpack carried by an user close against the human body; on the other hand, the solar panel is independently detachable, i.e. the solar panel may be mounted on the front side of the backpack main body by various methods such as hanging, plugging or adhering when the multifunctional backpack is carried by the user, and, for example, may be hung on a handle portion of the backpack main body. In addition, the solar panel may be detached from the multifunctional backpack to function as an external small-size solar assembly which collects and converts solar energy as desired at any time.

With respect to the power storage module 50, it may be disposed inside the interior of the backpack main body in a detachable manner. In a specific actual operation, a rechargeable cell such as a conventional lithium battery may be used. The power storage module may store electric energy collected and converted by the solar panel through a voltage conversion circuit (or directly) in order to provide electric power for a peripheral device, a cooling unit, a heating unit, etc. Of course, it can be realized by those skilled in the art that, in other embodiments, electric power converted from the solar panel may be directly supplied to a peripheral device, a cooling unit, a heating unit, etc., however, the present disclosure is not limited thereto. Similarly, in this embodiment, the power storage module 50 is functioned to be independently detachable. Thus, the power storage module may be taken off and used as a portable mobile power supply when the backpack is not used by the user, similar to the existing method of the power bank.

The power storage module may also be mounted or placed at any position in addition to the interior of the backpack main body as a separate module. For example, the power storage module is placed inside a pocket at a side of the backpack as a specially designed separate lithium battery. The power storage module may be connected with the solar panel and charged directly by solar energy, and may also be taken off and charged separately.

With respect to the controller 10, the controller is mainly used for controlling switches among a cooling mode, a heating mode and a power storage mode. That is, through manipulation of the controller, the electric energy of the solar panel 20 may be selected to be stored in a power storage module, be turned on/off a heating function, or be turned on/off a cooling function, or the like. Therefore, in the actual operation, the controller may be a module integrated with a plurality of switches, or a manipulation handle, or a panel, or others. Also, the controller may be mounted on the strap so that it may be conveniently operated by the user when the multifunctional backpack is carried, and the controller is connected with a plurality of components as mentioned above by multi-core cables. Of course, the controller 10 may also be mounted at a lateral side of the backpack main body and may be further used with a connector such as an elastic spiral line or an extendable bellows, so that the user may take off the controller from the lateral side of the backpack main body and pull it before his/her eyes to operate when required. In an embodiment of the present disclosure, the controller is, in a wireless connection way, electrically connected with a component as mentioned above, which is equipped with a corresponding wireless communication device. In an actual operation, a smart terminal may be used as the controller, so that a built-in software, an APP, etc. manipulates switches among storing electric energy, cooling and heating, and further performs a real-time detection and displays relevant information on converting efficiency of the solar panel, or output voltage, or electric quantity of the power storage module, or the like. It may be developed by those skilled in the art based on the present disclosure that, for example, the controller may also be replaced by a single-chip with an integrated program algorithm or other similar electronic units to realize an automatic control.

In addition, the controller 10 is connected with the solar panel 20, the cooling unit 30, the heating unit 40 and the power storage module 50, and is also directly electrically connected with the peripheral interface 60, 70 for charging external devices. Thus, the controller is also used for controlling electrical connection with the peripheral interface 60 to be switched on/off (i.e. controlling power supply to the peripheral interface), so that a direct charging function for an electric equipment such as mobile phone for example by power generated from the solar panel 20 may be controlled to be turn on/off. In other words, the controller 10 may be used for controlling switches between an electrical connection mode with the peripheral interface, a cooling mode, a heating mode and a power storage mode. Specifically, through manipulation of the controller, the electric energy of the solar panel may be selected to be used for charging external devices electrically connected with the peripheral interface, be stored in a power storage module, be turned on/off a heating function, be turned on/off a cooling function, or the like. When the heating function or the cooling function is selected to be turned on, external devices (electronics such as mobile phone) may be connected with an output of the power storage module in order to be charged.

With respect to the cooling unit 30 and the heating unit 40, a function thereof is to provide heating or cooling according to user's requirements in different seasons or different temperatures. Thus, the cooling unit 30 and the heating unit 40 may be considered to be respectively mounted on the back side of the backpack main body and/or the strap, in particular at a position of the multifunctional backpack close against the human body. The heating unit may be a conventional electrical heating wire. In an embodiment of the present disclosure, the heating unit may be made of a carbon nanotube composite material such as carbon nanotube ultrafine fiber having characteristics like excellent anisotropic thermal conductivity and high strength. The multifunctional backpack provided by the present disclosure may fully satisfy user's requirements in aspects of carrying strength of the backpack and heating requirement. The cooling unit may use a conventional air-cooling or water-cooling, or the like. In an embodiment of the present disclosure, the cooling unit may be a semiconductor cooling apparatus with a compact size and fast cooling, in which for example several semiconductor chilling plates are distributed inside a fabric. The foregoing cooling methods may be combined to improve cooling efficiency, for example, by combining a cooling fan and a semiconductor chilling plate.

In an embodiment of the present disclosure, the cooling unit and the heating unit may be mounted inside the multifunction backpack in a detachable manner as a separate unit.

In addition, the cooling unit may also include a hollow permeable layer covering the back side of the backpack main body, in which a fluid guide channel and one or more fans are provided. The one or more fans are mounted inside the hollow permeable layer in a detachable manner and are electrically connected with the controller, in order to turn on/off fan(s) by the controller. When the fan works, air flows through the fluid guide channel inside the hollow permeable layer, so that cooling air flows throughout the back side of the backpack main body, thereby achieving a wide range of cooling effects.

Since the multifunctional backpack has cooling and heating functions, in order to further perform optional control and monitor changes in temperature, the multifunctional backpack 100 may further include a first temperature sensor and a second temperature sensor in another embodiment of the present disclosure as shown in Fig. 2. The first temperature sensor 131 and the second temperature sensor 141 may be disposed inside the backpack main body. Specifically, the first temperature sensor 131 may be disposed at the cooling unit 130 and electrically connected with the controller 110 for detecting a cooling temperature, and the second temperature sensor 141 may be disposed at the heating unit 140 and electrically connected with the controller 110 for detecting a heating temperature. Based on this, the controller may be further provided with a visual display unit (if it is a wireless smart terminal, the display unit is a terminal screen) convenient for the user to check temperatures of a heating system or a cooling system. Moreover, it is also possible that a temperature threshold is set in the built-in program of the controller. The heating or cooling mode is automatically turned off to protect the backpack and the human body when the respective threshold is achieved by heating or cooling, which is not defined by the present disclosure.

Further referring to Fig. 2, a display screen 170 is provided on the front side of the backpack main body, the display screen 170 is electrically connected with the power storage module 150 and the controller 110, wherein the power storage module is used for supplying electric energy to the display screen, while the controller is used for controlling the display screen to be turned on or off. In addition, the display screen 170 may also receive information from the controller 110 to display the current electric quantity, heating or cooling temperature as previously mentioned. Since the display screen 170 faces outside, an editable display screen may also be considered to display more abundant information, such as personal information set by the user to prevent from taking a wrong backpack, a picture for showing individuality , a photo or even a distress signal (triggering the display of the distress signal may be performed through the foregoing controller by the user). It should be noted that, in an actual operation, the display screen may be combined with a new screen display product such as an electronic ink screen or a flexible display screen, in addition to a traditional LCD or LED screen.

In another embodiment of the present disclosure, the backpack 100 may further include a warning light 180. The warning light 180 is mounted on the backpack main body and/or the strap. In particular, the warning light may be a light strip around an outline of the backpack main body and/or the strap, and may also be mounted at an eye-catching position of the backpack main body and/or the strap. The warning light 180 may be electrically connected with the power storage module 150 and the controller 110. The power storage module is used for supplying power to the warning light and controlling the warning light to be turned on or off by the controller. In an actual operation, the warning light may be a group of lights or a light strip constituted by fluorescent lamps or LEDs, and a LED with a higher lumen value may also be considered, so as to cooperate with the foregoing display screen which may display a distress signal and send a corresponding distress warning lamplight. Similarly, it may be developed by those skilled in the art based on the present disclosure to automatically control the warning light to be turned on or off by means of cooperation between a program algorithm and other induction systems (such as a light sensor or an acceleration sensor).

## Claims

1. A multifunctional backpack (1) comprising a backpack main body and a strap, **characterized in that**, the multifunctional backpack further comprises: a controller (10); and a solar panel (20), a cooling unit (30), a heating unit (40) and a power storage module (50), which are electrically connected with the controller (10), respectively; the cooling unit (30), the heating unit (40) and the solar panel (20) are also electrically connected with the power storage module (50), respectively;
the solar panel (20) is detachably mounted on a front side of the backpack main body;
the power storage module (50) is detachably mounted inside the backpack main body;
the cooling unit (30) and the heating unit (40) are respectively mounted on a back side of the backpack main body and/or on the strap;
a peripheral interface (60; 70) is provided on the backpack main body, and is electrically connected with the power storage module (50) and/or the solar panel (20);
the controller (10) is configured to controll switches among a cooling mode, a heating mode and a power storage mode.

2. The multifunctional backpack according to claim 1, **characterized in that**, the controller (10) is also electrically connected with the peripheral interface for controlling electrical connection with the peripheral interface to be switched on/off.

3. The multifunctional backpack according to claim 2, **characterized in that**, the controller (10) is configured to controll switches between an electrical connection mode with the peripheral interface, a cooling mode, a heating mode and a power storage mode.

4. The multifunctional backpack according to claim 1, **characterized in that**, the multifunctional backpack (100) further comprises: a display screen (170) mounted on the front side of the backpack main body and electrically connected with the power storage module (150) and the controller (110);
the controller is also configured to controll the display screen (170) to be turned on or off.

5. The multifunctional backpack according to claim 1, **characterized in that**, the multifunctional backpack (100) further comprises: a warning light (180) mounted on the backpack main body and/or the strap, and electrically connected with the power storage module (150) and the controller (110);
the controller is also configured to controll the warning light to be turned on or off.

6. The multifunctional backpack according to claim 1, **characterized in that**, the multifunctional backpack further comprises a first temperature sensor (131) and a second temperature sensor (141);
the first temperature sensor (131) and the second temperature sensor (141) are electrically connected with the controller (110), respectively;
the first temperature sensor (131) is disposed at the cooling unit (130), and the second temperature sensor (141) is disposed at the heating unit (140).

7. The multifunctional backpack according to claim 4, **characterized in that**, the display screen (170) is a flexible display screen.

8. The multifunctional backpack according to claim 5, **characterized in that**, the warning light (180) is a fluorescent lamp.

9. The multifunctional backpack according to anyone of claims 1-8, **characterized in that**, the cooling unit (30) and the heating unit (40) are detachable, respectively.

10. The multifunctional backpack according to anyone of claims 1-8, **characterized in that**, the heating unit (40) is made of carbon nanotube composite material.

11. The multifunctional backpack according to anyone of claims 1-8, **characterized in that**, the cooling unit uses a semiconductor cooling apparatus.

12. The multifunctional backpack according to claim 1-8, the cooling unit (30) includes a hollow permeable layer covering the back side of the backpack main body, and a fluid guide channel and one or more fans are provided in the hollow permeable layer.

13. The multifunctional backpack according to anyone of claims 1-8, **characterized in that**, the solar panel (20) is a solar crystalline silicon cell or a solar thin film cell.

14. The multifunctional backpack according to anyone of claims 1-8, **characterized in that**, the power storage module (50) is a rechargeable cell.
